# EUROPEAN PATENT APPLICATION

(11) **EP 1 070 620 A2**
(43) Date of publication of application: **24.01.2001**
(21) Application number: 00115458.2
(22) Date of filing: 18.07.2000
(51) Int. Cl.: B60K 15/03

(54) **Multivalve for a vehicle gaseous fuel tank**

(30) Priority: 20.07.1999 IT TO990644
(71) Applicant: MTM- Meccanica Tecnica Moderna S.r.l., 12062 Cherasco (IT)
(72) Inventor: Ceratto, Danilo, 12051 Alba (IT)
(74) Representative: Eccetto, Mauro

(57) **Abstract**

A multivalve (1) for a vehicle gaseous fuel tank (2) has a safety valve (30), in turn, having an exhaust valve and a pilot valve (32; 32a) for controlling the exhaust valve (31); the exhaust valve (31) has a cavity (7) communicating with a fuel inlet conduit (15) and with a fuel outlet conduit (11), and a shutter (33) which engages the cavity (7) in fluidtight manner to define a first (36) and a second (35) variable-volume chamber, and slides inside the cavity (7) between an open position connecting the conduits (11)(15) to each other, and a closed position closing the inlet conduit (15); and the pilot valve (32; 32a), in use, connects the first chamber (36) to the outside to move the shutter (33) into the open position when the pressure in the tank (2) exceeds a given limit value.

## Description

The present invention relates to a multivalve for a vehicle gaseous fuel tank - in particular, for methane or liquefied petroleum gas or so-called LPG.

Multivalves for vehicle gaseous fuel tanks are known, which comprise a safety device in turn comprising a safety valve and a melt device for exhausting gas from the tank when the pressure or temperature in the tank reaches a predetermined maximum value.

The safety valve normally comprises a movable shutter subjected to the opposing forces of the pressure of the gas in the tank, and of a spring preloaded to a value corresponding with the maximum pressure value. When the maximum pressure value is reached, the shutter moves by an amount inversely proportional to the stiffness of the spring, so as to connect the tank to an exhaust opening.

The safety valves of known multivalves of the above type are both inefficient and unreliable, on account of the relatively long time taken to exhaust the surplus gas and restore the pressure in the tank to below the predetermined safety level, and which depends on the characteristics of the spring.

The reason for this lies in the exhaust gas flow passage being choked by, and proportional to the movement of, the shutter, thus resulting in fluid-dynamic resistance restricting outflow of the gas.

Flow of the exhaust gas is also restricted by the gas itself normally having to flow through the chamber housing the spring to reach the exhaust opening, thus encountering additional fluid-dynamic resistance generated by the spring.

It is an object of the present invention to provide a multivalve for a vehicle gaseous fuel tank, designed to eliminate the aforementioned drawbacks.

According to the present invention, there is provided a multivalve for a vehicle gaseous fuel tank, comprising a safety valve for exhausting at least part of the gaseous fuel contained in said tank; said safety valve comprising a cavity communicating with an inlet opening and an outlet opening for said fuel; and fluid on-off means housed in said cavity and movable between an open position connecting said openings, and a closed position closing one of said openings; characterized in that said on-off means comprise a shutter partly defining a first and a second variable-volume chamber separated from each other in fluidtight manner; said first chamber being connected to a pilot valve assembly for moving said shutter into said open position when the pressure in said tank exceeds a given limit value.

A non-limiting embodiment of the invention will be described by way of example with reference to the accompanying drawings, in which:
Figure 1 shows a plan view of a preferred embodiment of the multivalve for a vehicle gaseous fuel tank according to the present invention;
Figure 2 shows a larger-scale section, along line II-II in Figure 1, of the Figure 1 multivalve in a first operating position;
Figure 3 shows a smaller-scale view, as in Figure 2, of the Figure 1 multivalve in a second operating position;
Figures 4 and 5 are similar to Figures 2 and 3, and show larger-scale views, with parts removed for clarity, of a variation of the Figure 2 and 3 multivalve in the first and second operating positions respectively.

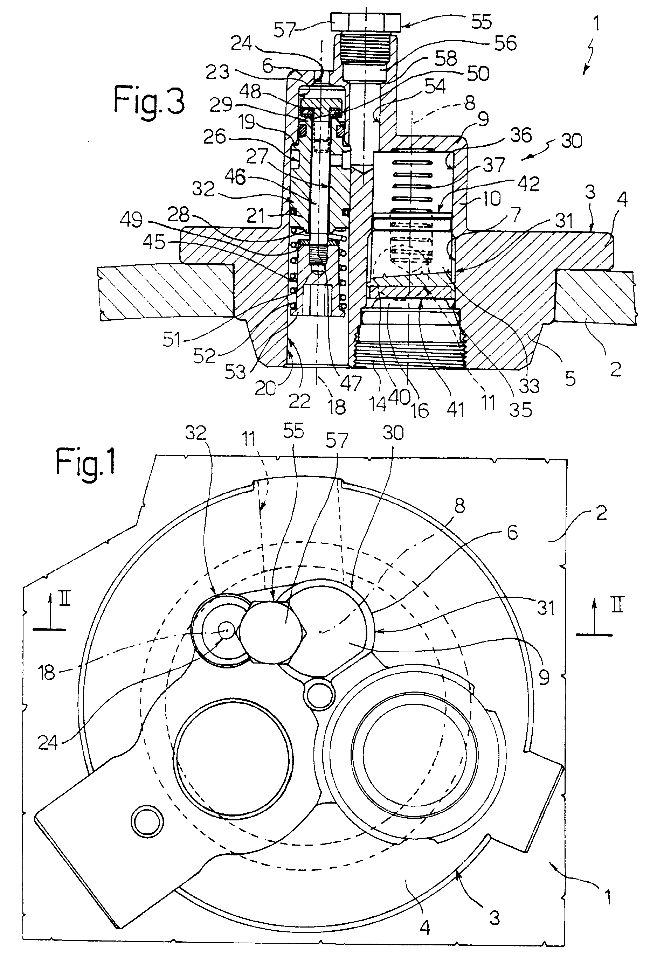

Number 1 in Figure 1 indicates a multivalve for a vehicle gaseous fuel tank 2. Multivalve 1 comprises a structure 3 connected integrally by screws (not shown) to a ring nut of tank 2, and in turn comprising an intermediate flange 4, an end portion 5 extending inside tank 2, and a portion 6 outside tank 2.

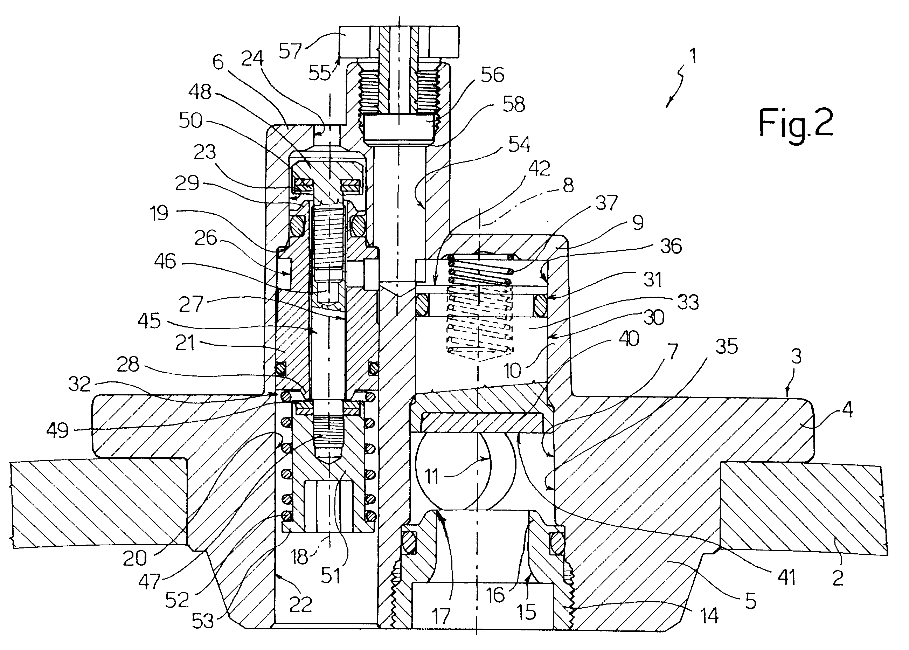

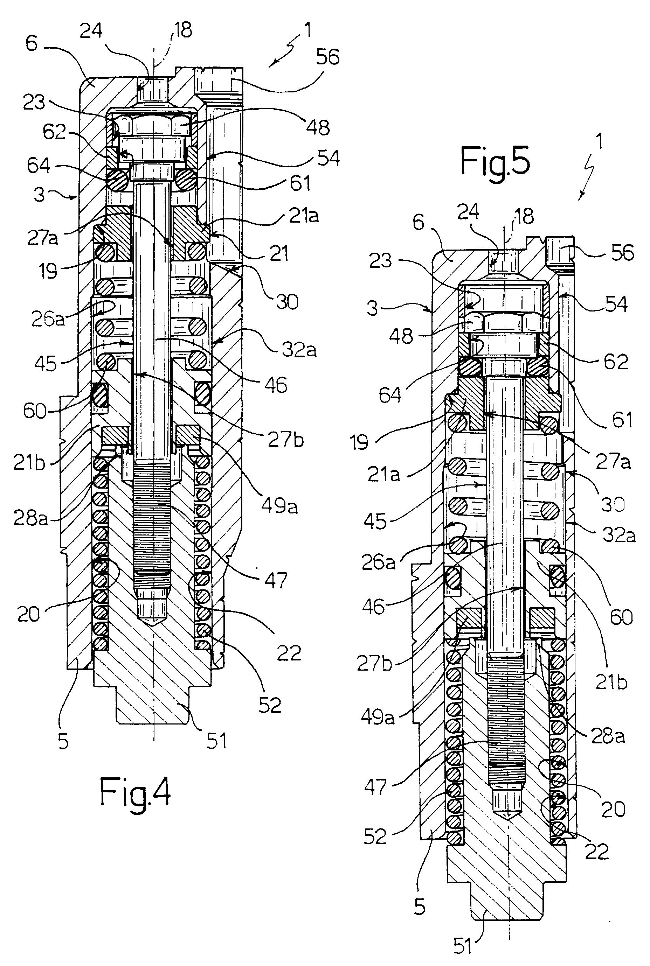

With reference to Figures 2 and 3, structure 3 defines a first cylindrical cavity 7, which extends along an axis 8 perpendicular to flange 4, is defined by an end wall 9 and by a lateral wall 10, and communicates externally via an exhaust conduit 11 extending perpendicular to axis 8.

Cavity 7 houses a tubular bush 14, which is screwed in fluidtight manner to portion 5, defines an axial conduit 15 communicating with tank 2, and terminates, at the end facing wall 9, with an annular projection 16 defining an opening 17 of conduit 15.

Structure 3 also defines a second cylindrical cavity 20, which extends from portion 5 along an axis 18 parallel to axis 8, and houses a cylindrical body 21 held against an axial shoulder 19 and mating in fluidtight manner with structure 3.

Body 21 divides cavity 20 axially into two opposite chambers 22 and 23; chamber 22 communicating directly with tank 2; and chamber 23 communicating externally via an axial hole 24 formed in portion 6. Body 21 comprises an outer circumferential groove 26; and an axial through hole 27, which connects chambers 22 and 23, communicates with groove 26, and has an inlet and an outlet terminating respectively in chambers 22 and 23 and defined by respective tapered annular projections 28 and 29.

Cavities 7 and 20 define the seats of a safety valve 30 comprising an exhaust valve 31 and a pilot valve 32 for controlling valve 31.

Exhaust valve 31 is an on-off type, i.e. with two operating positions, and provides for exhausting gaseous fuel from tank 2 in the event the temperature or pressure in tank 2 reaches a predetermined maximum safety value. Valve 31 comprises a cylindrical shutter 33, which mates in axially-sliding and fluidtight manner with lateral wall 10, and divides cavity 7 into two opposite variable-volume chambers 35 and 36; chamber 35 being defined by bush 14 and communicating with conduit 11 in any operating condition; and chamber 36 being defined by end wall 9, and housing a push spring 37 interposed between shutter 33 and end wall 9.

Shutter 33 carries a disk seal 40 facing projection 16, and is defined by two opposite parallel surfaces 41 and 42; surface 41 defining chamber 35 and coinciding with the outer surface of seal 40; and surface 42 defining chamber 36 and being larger in area than opening 17.

Shutter 33 is movable, in use, between a first closed position (Figure 3) - wherein seal 40 rests on projection 16 to close opening 17, and chamber 35 is reduced to an annular chamber extending about projection 16 and communicating with conduit 11 - and a second open or exhaust position (Figure 2) - wherein spring 37 is compressed and conduits 11 and 15 both communicate with chamber 35.

Valve 31 is controlled by valve 32, which, in addition to tubular body 21, also comprises a member 45 in turn comprising an intermediate cylindrical rod 46 extending loosely through hole 27, and two end portions 47 and 48. Portion 48 engages chamber 23, is connected to rod 46 by a screw-nut screw coupling, and carries a sealing ring 50 facing projection 29; and portion 47 engages a threaded hole in an end body 51, which is housed inside chamber 22 and carries a sealing ring 49 facing projection 28.

Member 45 is movable between a rest position (Figure 3) wherein sealing ring 50 rests against projection 29 to cut chamber 23 off from groove 26, and a withdrawn work position (Figure 2) wherein ring 49 rests against projection 28 to cut chamber 22 off from groove 26.

Valve 32 also comprises a spring 52, which surrounds body 51, is interposed between body 21 and an end flange 53 of body 51, and is preloaded to a setting determined according to the maximum permitted pressure inside tank 2, so as to keep member 45 in the rest position.

Valves 31 and 32 communicate with each other via a passage 54 formed in portion 6 of structure 3, between cavities 7 and 20 and parallel to axes 8 and 18. More specifically, passage 54 connects chamber 36 to groove 26, and is closed outwardly by a safety melt device 55.

Device 55 comprises a closing body 56 made of material which melts at a predetermined maximum temperature; and a pin 57 having an axial hole and screwed to structure 3 to force body 56 in fluidtight manner against a stop 58 surrounding passage 54.

In the Figure 4 and 5 variation, safety valve 30 comprises a pilot valve 32a, which differs from valve 32 by body 21 comprising two axial portions 21a and 21b; portion 21a being connected integrally to structure 3 and resting against shoulder 19; and portion 21b engaging cavity 20 in fluidtight manner in an intermediate movable axial position between portion 21a and body 51. Portions 21a and 21b are connected to each other via the interposition of a spring 60, comprise respective axial through holes 27a and 27b fitted through loosely with rod 46, and axially define in between a chamber 26a connecting passage 54 to holes 27a, 27b and housing spring 60.

Valve 32a also differs from valve 32 by comprising a projection 28a carried by body 51; and a sealing ring 49a carried by portion 21b in lieu of projection 28 and ring 49.

Finally, valve 32a also differs from valve 32 by having no ring 50 and no projection 29, and by rod 46 being surrounded by a sealing ring 61 and by a bush 62, which is located on the opposite axial side of ring 61 to portion 21a, is movable axially inside cavity 20, and, together with rod 46, defines an annular conduit 64 communicating with chamber 23.

When member 45 is in the rest position (Figure 5), ring 61 is compressed between bush 62 and portion 21a to cut conduit 64 off from hole 27a and, hence, chamber 23 from chamber 26a. Conversely, when member 45 is in the withdrawn work position (Figure 4), projection 28a rests against ring 49a to cut chambers 22 and 26a off from each other, while ring 61 permits communication between hole 27a and conduit 64.

In actual use, when the pressure and temperature in tank 2 are below the respective predetermined maximum values, multivalve 1 operates normally, with member 45 in the rest position and shutter 33 in the closed position.

With particular reference to Figure 3, in the above conditions, chamber 36, on the one hand, is cut off from the outside by ring 50 resting against projection 29, and, on the other, communicates with chamber 22, and hence with tank 2, via passage 54, groove 26 and hole 27. Chamber 36 and conduit 15 are therefore both at the same pressure, while the pressure in chamber 35 equals the outside pressure, and the difference in area between surface 42 and the portion of surface 41 closing opening 17 is such as to keep shutter 33 in the closed position.

With reference to Figure 2, when the pressure inside tank 2 exceeds the safety limit, the force exerted on member 45 by the pressure in tank 2 overcomes the force of preloaded spring 52, so that member 45 moves into the withdrawn position. In which case, chamber 36, on the one hand, is cut off from tank 2 by ring 49 resting against projection 28, and, on the other, is connected to chamber 23, and hence to the outside, via passage 54, groove 26 and hole 27. As a result of the difference in pressure between conduit 15 and chamber 36, shutter 33 switches instantly to the exhaust position and connects tank 2 to the outside to expel the surplus fuel from tank 2.

Upon the pressure in tank 2 falling below the maximum value, spring 52 restores member 45 to the rest position to reconnect chambers 36 and 22; the pressure in chamber 36 is restored to the same value as in tank 2; and the difference between the pressure acting on surface 42 and the pressure of the exhaust gas acting on surface 41 switches shutter 33 into the closed position.

The Figure 4 and 5 multivalve 1 operates in the same way as described above, except that springs 52 and 60 differ in stiffness, so that body 51 moves faster than portion 21b when the pressure in tank 2 exceeds the safety limit. Consequently, when member 45 moves into the withdrawn position, projection 28a first comes to rest on ring 49a to cut chamber 36 off from chamber 22, and ring 61 then frees the passage between hole 27a and conduit 64 to connect chamber 36 to the outside.

When the temperature in tank 2 reaches the predetermined maximum safety value, e.g. in the event of the vehicle catching fire, body 56 melts to connect passage 54, and hence chamber 36, to the outside via the hole in pin 57, so that, again on account of the difference in pressure between conduit 15 and chamber 36, shutter 33 switches to the exhaust position to expel substantially all the fuel from tank 2.

Multivalve 1 therefore provides for rapidly expelling the gaseous fuel through safety valve 31 in the event of emergency.

Unlike known solutions, in fact, shutter 33 moves substantially instantly, without choking the gas passage between conduits 11 and 15, on account of the movement of shutter 33 depending on the pressures acting on surfaces 41 and 42, and only to a negligible extent on the force exerted by spring 37, which simply provides for holding shutter 33 against projection 16 during assembly. The resistance encountered by the exhaust gas is therefore extremely small as compared with known solutions in which the shutter only partly opens the exhaust gas passage, due to the force exerted by the gas being opposed by the action of a preloaded spring exerting an opposite force proportional to the travel of the shutter.

Moreover, the fuel encounters no resistance generated by springs or other elements interposed between conduits 11 and 15, on account of chamber 35 communicating directly with conduit 11.

Finally, the fact that valve 32a comprises a portion 21b movable axially with respect to portion 21a provides for independently sealing the opposite ends of member 45, and for more accurate operation and faster response as compared with valve 32.

Clearly, changes may be made to multivalve 1 as described herein without, however, departing from the scope of the present invention.

In particular, multivalve 1 may comprise a safety valve 30 differing from the one described and illustrated by way of example, but still comprising means for so controlling exhaust valve 31 as to connect chamber 36 to the outside in emergency operating mode or to tank 2 in normal operating mode.

## Claims

1. A multivalve (1) for a vehicle gaseous fuel tank (2), comprising a safety valve (30) for exhausting at least part of the gaseous fuel contained in said tank (2); said safety valve (30) comprising a cavity (7) communicating with an inlet opening (15) and an outlet opening (11) for said fuel; and fluid on-off means (33) housed in said cavity (7) and movable between an open position connecting said openings (11)(15), and a closed position closing one (15) of said openings (11)(15); characterized in that said on-off means (33) comprise a shutter (33) partly defining a first (36) and a second (35) variable-volume chamber separated from each other in fluidtight manner; said first chamber (36) being connected to a pilot valve assembly (32; 32a) for moving said shutter (33) into said open position when the pressure in said tank (2) exceeds a given limit value.

2. A multivalve as claimed in Claim 1, characterized in that said outlet opening (11) communicates with said second chamber (35) regardless of the position of said shutter (33).

3. A multivalve as claimed in Claim 1 or 2, characterized in that said pilot valve assembly (32; 32a) comprises a member (45) movable between a first work position connecting said first chamber (36) to said tank (2), and a second work position connecting said first chamber (36) to the outside.

4. A multivalve as claimed in Claim 3, characterized in that said pilot valve assembly (32; 32a) comprises preloaded elastic means (52; 52, 60) exerting a force in opposition to said member (45) to keep the member in said first work position.

5. A multivalve as claimed in Claim 3 or 4, characterized in that said pilot valve assembly (32; 32a) comprises a portion (21) defining a first cavity (22) communicating with said tank (2), and a second cavity (23) communicating with the outside; said member (45) selectively isolating said first chamber (36) from said first and said second cavity (22)(23).

6. A multivalve as claimed in Claim 5, characterized in that said first and said second cavity (22)(23) communicate with each other via a hole (27; 27a, 27b) formed in said portion (21) and having an inlet and an outlet terminating in said first (22) and said second (23) cavity; said member (45) engaging said hole (27; 27a, 27b) to selectively close said inlet and said outlet.

7. A multivalve as claimed in Claim 6, characterized by comprising a passage (26, 54; 26a, 54) connecting said hole (27; 27a, 27b) and said first chamber (36).

8. A multivalve as claimed in any one of Claims 5 to 7, characterized in that said portion (21) comprises two portions (21a)(21b), one movable with respect to the other, and connected to each other via the interposition of a spring (60).

9. A multivalve as claimed in any one of the foregoing Claims, characterized by comprising a further passage (54) connecting said first chamber (36) to the outside; said passage (54) being closed by a body (56) which melts at a predetermined temperature.
